# EUROPEAN PATENT APPLICATION

(11) **EP 4 039 548 A1**
(43) Date of publication of application: **10.08.2022**
(21) Application number: 21156001.6
(22) Date of filing: 09.02.2021
(51) Int. Cl.: B60R 19/48

(54) **EXTERNAL CLADDING COMPONENT OF A VEHICLE AND VEHICLE COMPRISING SUCH AN EXTERNAL CLADDING COMPONENT**

(71) Applicant: Motherson Innovations Company Limited, London EC2N 2AX (GB)
(72) Inventor: SEPP, Benjamin, 77723 Gengenbach (DE)
(74) Representative: Westphal, Mussgnug & Partner Patentanwälte mbB

(57) **Abstract**

The present invention relates to an external cladding component (12) of a vehicle (10), comprising a plastic body (24) comprising a number of through-openings (32) and/or recesses, and at least an insert part (34) that is inserted into one of the through-openings (32) or recesses, the insert part (34) being made as a molded-in-color part and permeable to electromagnetic waves (λ) in the range between 50 and 200 GHz. Moreover, the present disclosure relates to a vehicle (10) comprising such an external cladding component (12).

## Description

The present disclosure relates to an external cladding component of a vehicle. Moreover, the present disclosure relates to a vehicle comprising such an external cladding component.

To enhance the operational safety, modern vehicles are equipped with a number of assistance systems assisting the vehicle driver. Many assistance systems are based on the monitoring of the surroundings of the vehicle and interact with respective sensors. Based on the situation identified in the surroundings of the vehicle the assistance systems may take action. Such an action may be to generate a signal, e.g., in optical or acoustic form, to draw the driver's attention to a certain situation. Such a situation could be that objects are identified in the surroundings that may collide with the vehicle if no counteractions are taken. Another action may be that the assistance systems initiate a braking manoeuver and/or to intervene in the steering to conduct an evasive manoeuver. The monitoring of the surroundings of a vehicle is a key issue in the autonomous driving.

To monitor the surroundings the sensors may comprise a source for electromagnetic waves that are emitted to the surroundings. In case an object is present in the surroundings the electromagnetic waves are reflected and detected by a respective receiver. The situation in the surroundings of the vehicle can thus be characterized. The degree a certain object reflects the electromagnetic waves amongst others depends on the material the object is made of. Other factors are the size of the object and the effective reflection surface. Consequently vehicles are equipped with sensors, among others radar sensors, using electromagnetic waves of different wavelength and frequency ranges.

Due to design reasons the sensors are located behind the external cladding component such that they are invisible or almost invisible from the exterior. Therefore, the electromagnetic waves emitted by the respective sources have to penetrate the external cladding component of the vehicle. In many cases the external cladding components are made of plastics, in particular of thermoplastics, that dampen the electromagnetic waves penetrating there through. The more the waves are dampened the smaller is the range by which the sensors can monitor the surroundings of the vehicle. The degree by which the electromagnetic waves are dampened depends on several factors, some of which are the wall thickness of the external cladding component, the material composition and thickness of the walls and the lacquer. Due to reasons of design, it is desirable to provide the cladding component with the same color as the outer color of the body shell of the vehicle. For this purpose, a number of lacquer layers are applied to the external cladding components. In addition to the additional manufacturing steps required, the lacquer layers add to the dampening of the electromagnetic waves. Next to the number and thickness of the lacquer layers applied to the external cladding component, the composition of the lacquer layers plays a decisive role in the dampening of the electromagnetic waves. For example, if the body shell comprises a metallic paint, the lacquer applied to the external cladding component comprises metal particles to provide the same or similar metallic optic. However, these metal particles add to the dampening of the electromagnetic waves.

Ways to reduce the dampening of electromagnetic waves are disclosed in DE 100 53 517 A1, DE 198 19 709 A1, DE 10 2018 211 786 A1, DE 102 59 246 A1, WO 2006/042725 A1 and WO 2007/045452 A2.

One way to reduce the dampening of the electromagnetic waves is to produce the external cladding components as so called "molded-in-color"-parts (MIC) in which color particles are added to the thermoplastic particles prior to the injection molding process. As a result, the external cladding components are already colored when the injection molding process is finished avoiding painting steps. However, the molded-in-color-process has some drawbacks.

The color of the external cladding components so obtained usually only approximately matches the color of the body shell. Therefore the molded-in-color-process is mainly used for parts which may have a completely different color and gloss than the body shell. Examples are exhaust trims and footboards. Molded-in-color-parts may also be used to replace chrome frames. Beyond that the mechanical stability of molded-in-color parts is lower compared to parts made of thermoplastics typically used for trim parts. To circumvent the reduced mechanical stability the molded-in-color-parts are small and not load bearing.

To provide external cladding components made by a molded-in-color-process with a metallic optic, metal particles are added which again negatively affects the dampening of the electromagnetic waves.

It is one task of one embodiment of the present disclosure to present an external cladding component by which the dampening degree for electromagnetic waves can be easily and cost-efficiently be kept low. Furthermore, an embodiment of the present disclosure has the object to provide a vehicle that can be equipped with such an external cladding component.

The task is solved by the features specified in claims 1 and 7. Advantageous embodiments are the subject of the dependent claims.

According to an embodiment an external cladding component of a vehicle comprises
- a plastic body comprising a number of through-openings and/or recesses, and
- at least an insert part that is inserted into one of the through-openings or recesses, the insert part being
   ∘ made as a molded-in-color part and
   ∘ permeable to electromagnetic waves in the range between 50 and 200 GHz.

The external cladding component of the present disclosure comprises a plastic body made in the usual way by a thermoplastic. The plastic body can be painted such that the color matches the color of the body shell of the given vehicle. So far the external cladding component of the present disclosure equals one of the prior art. However, the plastic body of the present disclosure comprises a number of through-openings and/or recesses. The through-openings or recesses are located in the vicinity of sources for electromagnetic waves in the range between 50 and 200 GHz when mounted on the given vehicle. The through-openings or recesses are filled by insert parts that are made as molded-in-color parts. Their color may deliberately be chosen, for example to be in pronounced contrast to the color of the remaining plastic body. The insert parts thus act as a design element emphasizing the design of the given vehicle. Moreover, the insert parts do not have to be provided with a metallic optic such that the dampening of the electromagnetic waves is largely reduced compared to an external cladding component of the prior art. As the through-openings or recesses are only located in the vicinity of sources for electromagnetic waves the mechanical stability of the plastic body is only impaired to a negligible degree.

The external cladding component may be embodied as a front bumper, a rear bumper or a B-pillar cladding.

A further embodiment is characterized in that the insert part is made of a thermoplastic material comprising a number of particles having a core of an electrically non-conductive material, and a metallic coating applied on the core. The use of such particles provides a metallic optic to the insert part which adds to the design of the external cladding component and thus to the entire vehicle. Due to the fact that the core of the particles is made of an electrically non-conductive material, the volume of metallic material is minimized and the dampening of electromagnetic waves can significantly be reduced compared to particles entirely made of metallic material. At the same time the metallic optic exhibited by the insert part according to this embodiment is not negatively affected compared to conventional molded-in-color-parts.

According to another embodiment the core is made of plastic or glass. This material is cheap and is suited as a substrate for the metallic coating.

In accordance with a further embodiment the metallic coating is applied on the core by physical vapor deposition or chemical vapor deposition. By these processes, a very thin layer of the metallic coating can be applied to the core such that the volume of metallic material can be kept low. The lower the volume the lower the dampening for electromagnetic waves and the lower the costs.

In addition to physical vapor deposition, for example sputtering or thermal evaporation, the chemical vapor deposition process may be plasma assisted. Further, thermal spraying, chemical solution deposition, coating in solution, coating processes (fluidized bed coating, top-spray coating) or plastic electroplating (application of an electrical layer as the first step) can also be used.

A further embodiment is characterized in that the metallic coating is only partially applied on the core. It has been found that for providing a sufficient metallic optic it is not necessary to coat the complete surface of the core. Again, costs and dampening can be kept low.

In another embodiment the insert part is made of a first plastic component forming voids, the voids being filled by a second plastic component that is a molded-in-color component. It is not necessary to produce the entire insert part as a molded-in-color part. The insert part may comprise voids that are filled by molded-in-color components. The insert part may be provided with certain patterns, e.g. the brand logo of the vehicle manufacturer. Other patterns like a ventilation grille can be provided, at the same time keeping the dampening for electromagnetic waves low.

Another aspect of the disclosure is directed to a vehicle, comprising
- a source for electromagnetic waves in the range between 50 and 200 GHz,
- an external cladding component according to one of the preceding embodiments,
- the source being arranged such that the electromagnetic waves generated by the source penetrate the insert part.

The technical effects and advantages as discussed with regard to the present external cladding component equally apply to the vehicle. Briefly, the color of the insert parts may deliberately be chosen such that it is in pronounced contrast to the color of the remaining plastic body. The insert parts thus act as a design element emphasizing the design of the given vehicle. Moreover, the insert parts do not have to be provided with a metallic optic such that the dampening of the electromagnetic waves is largely reduced compared to an external cladding component of the prior art. As the through-openings or recesses are only located in the vicinity of sources for electromagnetic waves the mechanical stability of the plastic body is only impaired to a negligible degree.

The present disclosure is described in detail with reference to the drawings attached wherein
- Figure 1: shows a principle side view of a vehicle having an external cladding component according to the present disclosure,
- Figure 2: shows a section view through an external cladding component of the present disclosure,
- Figure 3: shows a vehicle comprising a plurality of external cladding components of the present disclosure, the vehicle being shown by means of a principle top view,
- Figure 4: shows a front view of a first embodiment of an external cladding component according to the present disclosure,
- Figure 5: shows a front view of a second embodiment of an external cladding component according to the present disclosure,
- Figure 6: shows a front view of a third embodiment of an external cladding component according to the present disclosure, and
- Figures 7A to 7C: different embodiments of particles that may be added to the external cladding components according to the present disclosure.

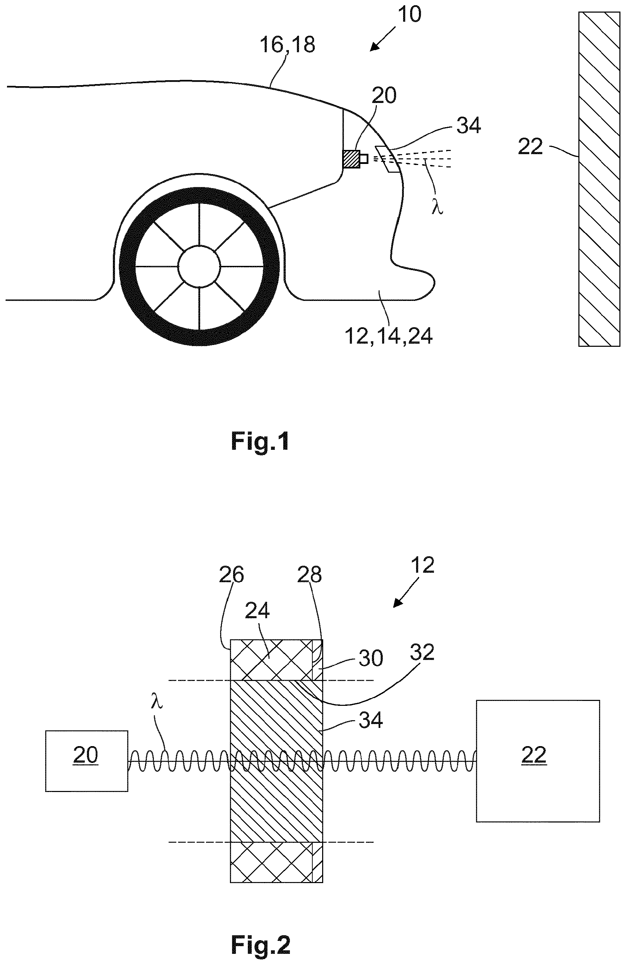

Figure 1 shows the front part of a vehicle 10 that is equipped with an external cladding component 12 according to the present disclosure. The external cladding component 12 is embodied as a front bumper 14 and mounted flush with a body shell 16 of the vehicle 10, in this case with an engine hood 18.

The vehicle 10 is provided with a source 20 for electromagnetic waves λ in the range between 50 and 200 GHz which is typical for radar waves. A radar sensor (not shown) may be integrated into the source 20. The sensor is able to monitor the surroundings of the vehicle 10 and identify objects 22 the vehicle 10 may collide with.

As particularly visible in Figure 2 the external cladding component 12 comprises a plastic body 24 which forms a first surface 26 which is facing to the interior of the vehicle 10 and to the source 20 for electromagnetic waves λ. Moreover, the plastic body 24 forms a second surface 28 which faces to the exterior of the vehicle 10 and is thus the visible side of the external cladding component 12. The source 20 for electromagnetic waves λ is not visible from outside. A lacquer 30 is applied to the second surface 28 of the plastic body 24, the lacquer 30 having the same color as the remaining body shell 16 of the vehicle 10.

The plastic body 24 is provided with a number of through-openings 32 that are arranged in the vicinity of the source 20 for electromagnetic waves λ when the external cladding component 12 is mounted to the vehicle 10. The through-openings 32 are completely filled by insert parts 34 that are made as molded-in-color parts. The insert parts 34 may be arranged flush with the second surface 28 of the external cladding component 12. However, it is also conceivable that the insert parts 34 protrude over the second surface 28. The insert part may be fastened to the plastic body 24 e.g. by friction or two-component-injection molding. Other fastening methods like gluing or welding are also conceivable.

Electromagnetic waves λ emitted by the source 20 impinge on the insert part 34 and penetrate the same.

It is worth mentioning that the insert part 34 is not painted. In case the lacquer 30 the plastic body 24 is painted with exhibits a metallic optic it comprises metallic particles (not shown) that may dampen the electromagnetic waves λ emitted by the source 20. As the insert part 34 is not painted the electromagnetic waves λ emitted by the source 20 can penetrate the insert part 34 without or only slightly being dampened by metallic particles. The range of the sensor is not significantly reduced by the external cladding component 12.

Not shown is an embodiment in which the plastic body 24 is provided with recesses instead of or in addition to through-openings 32. In contrast to the through-openings 32 the recesses do not completely run through the plastic body 24.

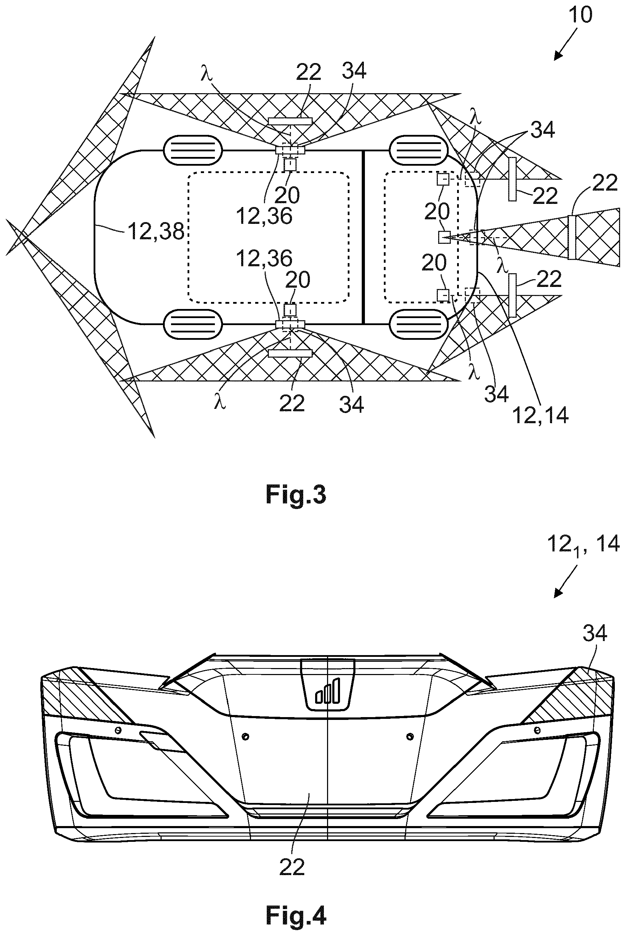

Figure 3 shows a top view of a vehicle 10 being equipped with a plurality of external cladding components 12. A first external cladding component 12 is embodied as the front bumper 14 as shown in Figure 1. Moreover, two second external cladding components 12 are embodied as B-pillar claddings 36. A third external cladding component 12 is embodied as a rear bumper 38. In the vicinity of each external cladding component 12 at least one source 20 for electromagnetic waves λ is arranged such that objects 22 in the entire surroundings of the vehicle 10 can be identified. For the sake of clarity the sources 20 located in the vicinity of the rear bumper 38 is not shown.

Figure 4 shows a first embodiment of an external cladding component 12₁ according to the present disclosure by means of a front view. The external cladding component 12₁ according to the first embodiment is a front bumper 14. The insert parts 34 are located in the area of the upper left end and the upper right end of the front bumper 14. The sensors located behind the insert parts 34 are particularly suited to monitor the surroundings in the left and right front of the vehicle 10.

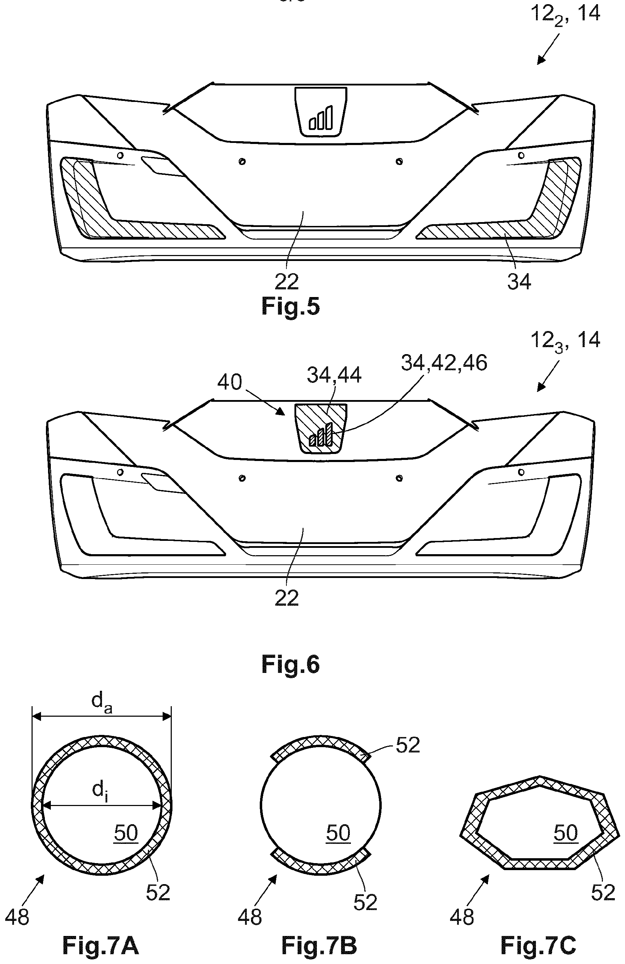

Figure 5 shows a second embodiment of an external cladding component 12₂ according to the present disclosure by means of a front view. The external cladding component 12₂ according to the second embodiment is a front bumper 14. The insert parts 34 are located in the area of the lower left corner and the lower right corner of the front bumper 14 but also extend towards the center of the front bumper 14. The sensors located behind the insert parts 34 are particularly suited to monitor the surroundings in the left and right front of the vehicle 10.

Figure 6 shows a third embodiment of an external cladding component 12₃ according to the present disclosure by means of a front view. The external cladding component 12₃ according to the third embodiment is a front bumper 14. The insert part 34 is arranged in the upper center of the front bumper 14 where the brand logo 40 of the vehicle manufacturer is typically positioned. In this embodiment the insert part 34 is made of a first plastic component 44 forming voids 42, the voids 42 being filled by a second plastic component 44 that is a molded-in-color component. The voids 42 are designed to represent the brand logo 40 of the vehicle manufacturer. The voids 42 may be formed as recesses or cut-outs. The first plastic component 44 may be the same the plastic body 24 is made of. However, the first plastic component 44 may serve as a background for the brand logo 40 and thus does not need to be painted. Lacquer 30 comprising metallic particles can be avoided irrespective of the painting of the remaining body shell 16 of the vehicle 10. As mentioned, the second plastic component 44 is a molded-in-color component, the color of which may be chosen to create a pronounced contrast to the background without the need of employing a lacquer 30. As a result, the dampening of the electromagnetic waves emitted from the source 20 located behind the insert part 34 is kept low. The sensor located behind the insert part 34 is particularly suited to monitor the surroundings in the central front of the vehicle 10.

Figures 7A to 7C show different embodiments of particles 48 which may be added to the thermoplastic material the insert parts 34 is made of to provide the latter with a metallic optic. The particles 48 comprise a core 50 of an electrically non-conductive material and a metallic coating 52 applied on the core 50. The core 50 may be made of glass or of plastics such as polyamide.

In Figure 7A a first embodiment of a particle 48 is shown in which the core 50 and thus the entire particle 48 has approximately the form of a ball. The diameter di of the core 50 may be in the range of 0,4 mm to 0,5 mm, the diameter dₐ of the entire particle 48 can be 0,01 to 0,02 mm bigger. The metallic coating 52 may be applied by sputtering or the like and covers the entire core 50.

Figure 7B shows a second embodiment of the particle 48. The core 50 has the same shape and dimension as the core 50 of the first embodiment of the particle 48. However, in this case the core 50 is only partially covered by the metallic coating 52.

In Figure 7C a third embodiment of the particle 48 is shown. In this case the core 50 has the form of a flake widely deviating from the shape of a ball. In this case the entire core 50 is covered by the metallic coating 52.

### Reference list

- 10: vehicle
- 12: external cladding component
- 12₁ - 12₃: external cladding component
- 14: front bumper
- 16: body shell
- 18: engine hood
- 20: source
- 22: object
- 24: plastic body
- 26: first surface
- 28: second surface
- 30: lacquer
- 32: through-opening
- 34: insert part
- 36: B-pillar cladding
- 38: rear bumper
- 40: brand logo
- 42: void
- 44: first plastic component
- 46: second plastic component
- 48: particle
- 50: core
- 52: metallic coating

- dₐ: diameter
- dᵢ: diameter
- λ: electromagnetic wave

## Claims

1. External cladding component (12) of a vehicle (10), comprising
- a plastic body (24) comprising a number of through-openings (32) and/or recesses, and
- at least an insert part (34) that is inserted into one of the through-openings (32) or recesses, the insert part (34) being
∘ made as a molded-in-color part and
∘ permeable to electromagnetic waves (λ) in the range between 50 and 200 GHz.

2. External cladding component (12) according to claim 1, **characterized in that** the insert part (34) is made of a thermoplastic material that comprises a number of particles (52) having
- a core (50) of an electrically non-conductive material, and
- a metallic coating (52) applied on the core (50).

3. External cladding component (12) according to claim 2,
**characterized in that** the core (50) is made of plastic or glass.

4. External cladding component (12) according to one of the claims 2 or 3,
**characterized in that** the metallic coating (52) is applied on the core (50) by physical vapor deposition or chemical vapor deposition.

5. External cladding component (12) according to one of the claims 2 to 4,
**characterized in that** the metallic coating (52) is only partially applied on the core (50).

6. External cladding component (12) according to one of the preceding claims,
**characterized in that** the insert part (34) is made of a first plastic component (44) forming voids (42), the voids (42) being filled by a second plastic component (46) that is a molded-in-color component.

7. Vehicle (10), comprising
- a source (20) for electromagnetic waves (λ) in the range between 50 and 200 GHz, and
- an external cladding component (12) according to one of the preceding claims,
- the source (20) being arranged such that the electromagnetic waves (λ) generated by the source (20) penetrate the insert part (34).
